Europäisches Patentamt

European Patent Office

Office européen des brevets

(19)

(11) **EP 1 345 412 A2**

(12) **EUROPEAN PATENT APPLICATION**

(43) Date of publication:
**17.09.2003 Bulletin 2003/38**

(51) Int Cl.$^7$: **H04N 1/401**

(21) Application number: **02028845.2**

(22) Date of filing: **23.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **14.03.2002 US 365050 P**

(71) Applicant: **Creo IL. Ltd.
46103 Herzlia Pituah (IL)**

(72) Inventors:
• **Barkan, Stanley
30825 D.N. Hof HaCarmel (IL)**
• **Goldsmith, Leon
46424 Herzlia (IL)**

(74) Representative: **Hofmann, Harald
Sonnenberg Fortmann,
Postfach 33 08 65
80068 München (DE)**

(54) **Method and apparatus for composing flat lighting and correcting for lighting non-uniformity**

(57) A method and apparatus for composing uniform lighting and correcting for any remaining lighting non-uniformity. The method involves capturing a reference image utilizing a background sheet of uniformly reflective material. The reference image is processed and an exaggerated version of the reference image highlighting the hot and cold regions is displayed. The user modifies the lighting to compose the flattest lighting possible. A lighting calibration file is saved comprising a smoothed approximation of the light intensity of each pixel and the average of the pixels. The actual image is corrected for the remaining non-uniform lighting by utilizing the lighting calibration file.

FIG. 2

EP 1 345 412 A2

**EP 1 345 412 A2**

**Description**

The invention relates generally to the field of digital photography, and more specifically to a method for ensuring flat lighting of two-dimensional objects and correcting for lighting non-uniformity.

When photographing two-dimensional objects such as artwork or calibration patch targets such as those used for creating International Color Consortium (ICC) profiles (http://www.color.org), it is often necessary to ensure flat lighting so that the image will not be affected by variations in the illuminant. In state-of-the-art digital photography, it is customary to capture an initial image of the lighting projected on to a flat white surface, in the plane where the object to be imaged will ultimately be placed. Selected spots in the image are measured and the lighting is adjusted until approximately equal values are achieved.

This process is slow and cumbersome and does not guarantee that hot or cold spots, where the illuminant values are higher or lower than average, will not be missed. Moreover, it is extremely difficult to get exact flat lighting without expensive equipment such as elongated, vertical sidelights placed at equal distances on both sides.

Thus there is a need for a method and apparatus that will simplify the process of imaging, and in particular enable a simplified adjustment of lighting. It is also desirable that the method compensate for any residual hot and cold spots.

Accordingly, it is a principal object of the present invention to overcome the disadvantages of prior art methods of imaging. This is provided in the present invention by capturing a reference image under given lighting conditions and calculating a measure of the non-uniformity in the lighting over the reference image, saving the measure as a lighting calibration file, capturing an actual image of the object and modifying the captured actual image by reference to the lighting calibration file.

In an exemplary embodiment the invention further provides for displaying a visualization of the reference image. In one further exemplary embodiment the visual representation comprises exaggerating respective bright and dark spots within the reference image, which in one yet further embodiment comprises normalizing data points with respect to a maximum tolerable deviation in lighting. In another yet further embodiment the exaggerated version comprises utilizing a function of an approximate measure of perceived luminance. In another further exemplary embodiment the visualization comprises carrying out an encoding utilizing the CIELAB system.

In a preferred embodiment the measure of non-uniformity in lighting over the reference image comprises an approximate measure of light intensity. In one further preferred embodiment the approximate measure of light intensity comprises the average of red, green and blue brightness for respective image pixels, while in another further preferred embodiment the approximate measure of light intensity comprises data smoothed by a spatial convolution with a circularly symmetric, uniform or Gaussian kernel.

In one preferred embodiment the reference image and the actual image are captured by a digital camera. In another preferred embodiment a color filter array is used.

The invention also provides for an apparatus for digital imaging which compensates for non-uniform lighting comprising an image capture device and a processor. The processor comprises image visualization functionality, associated with the image capture device for generating a visualization of a reference image, and image processing functionality associated with the image visualization functionality for measuring deviations in lighting levels over the visualization, for using the measured deviations to form a lighting calibration file and for modifying brightness levels of further images captured by the image capture device, using the lighting calibration file.

In an exemplary embodiment the visualization comprises exaggerating brightness levels in respective bright and dark regions of the reference image. In one further embodiment the exaggeration comprises normalizing data by a maximum tolerable deviation in lighting. In another further embodiment the exaggeration comprises using a function of an approximate measure of perceived luminance.

In one embodiment the visualization comprises using an encoding utilizing the CIELAB system. In another preferred embodiment the measuring deviations comprise an approximate measure of light intensity. In one further preferred embodiment the approximate measure of light intensity comprises the average of red, green and blue pixel brightness levels, while in another further preferred embodiment the approximate measure of light intensity comprises measuring brightness using data smoothed by a spatial convolution with a circularly symmetric, uniform or Gaussian kernel.

In one preferred embodiment the image capture device comprises a digital camera, while in another preferred embodiment the image capture device comprises a color filter array.

The invention also provides for an apparatus for digital imaging which compensates for non-uniform lighting comprising an image capture device for capturing a reference image under given lighting conditions; a brightness calculating unit for calculating measures of non-uniformity in lighting over the reference image; memory, associated with the brightness calculating unit, for saving the measure over the reference image as a lighting calibration file. The image capture device is operable to capture a further image substantially under the given lighting conditions, wherein the apparatus comprises an image modifier, associated with the memory for modifying the actual image by reference

2

to the lighting calibration file.

Additional features and advantages of the invention will become apparent from the following drawings and description.

For a better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:

Fig. 1 illustrates a block diagram of a setup for lighting calibration;
Fig. 2 illustrates a high level flow chart used to perform the lighting calibration;
Fig. 3 illustrates a high level flow chart used to process the reference image;
Fig. 4 illustrates a high level flow chart used to capture and correct the actual image, and
Fig. 5 illustrates a block diagram of an exemplary embodiment of processor 30 of Fig. 1.

The present embodiments enable an initial lighting correction by displaying an exaggerated graphical view of the lighting non-uniformity on a reference background. Any remaining non-uniformity is stored in a lighting calibration file and is used to correct the actual image.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

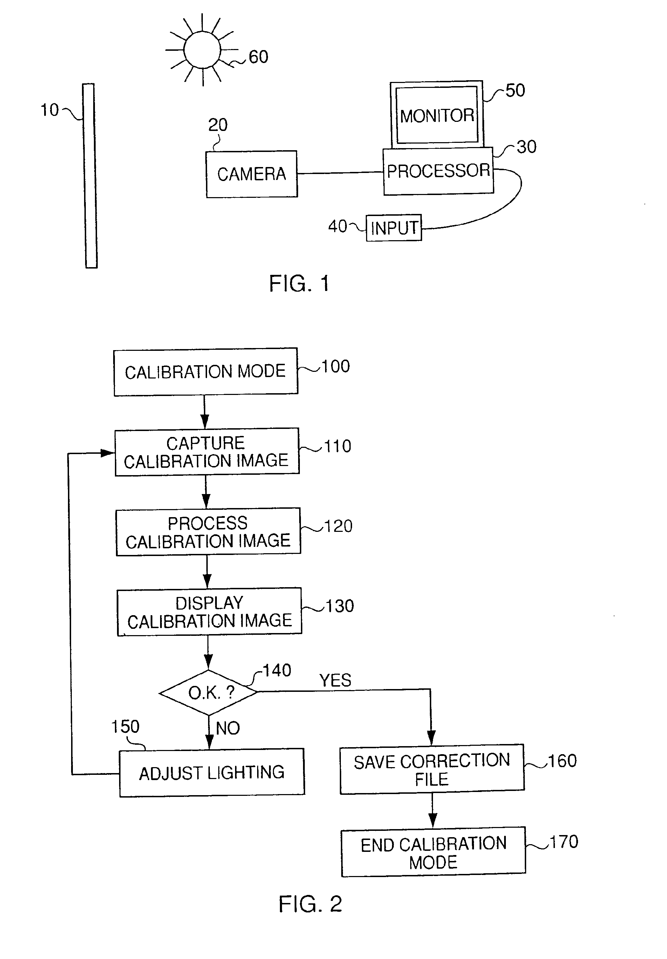

Fig. 1 is a high level block diagram of a setup used for lighting calibration, comprising a background sheet 10, image capture device 20, processor 30, input device 40, monitor 50 and illuminant 60. Background sheet 10 is illuminated by illuminant 60, and viewed by image capture device 20. Image capture device 20 is connected to processor 30, and processor 30 has connected thereto input device 40 and monitor 50. Background sheet 10 typically comprises a large sheet of uniformly reflective material placed in the plane in which the two-dimensional object to be photographed will be placed. In a preferred embodiment the uniformly reflective material exhibits a neutral color, i.e. white or gray with a flat spectral response in the visible wavelength region. In one embodiment image capture device 20 comprises a digital camera. Processor 30 may for example comprise a general purpose computer, personal computer, work station or may be embedded within image capture device 20, all without exceeding the scope of the invention. Input device 40 may for example be a keyboard, pointing device or a plurality of function keys all without exceeding the scope of the invention, and may be used in an exemplary embodiment to set modes as will described further below. Illuminant 60 comprises lighting used to illuminate the object to be imaged, and includes all ambient light sources, and any momentary lights such as a flash or strobe.

Fig. 2 is a high level flow chart of the operational steps according to a preferred embodiment of the invention. In step 100 the image capture device 20 and associated processor 30 are set to a calibration mode. In an exemplary embodiment this is accomplished by operation of input device 40. The user sets up background sheet 10 of Fig. 1 and prepares the illuminant 60 for operation. In step 110 the image of background sheet 10 is captured. It is important to note that illuminant 60 is operated in the normal fashion for imaging, and thus the captured image comprises any non-uniformity from the light sources in the reflection from background sheet 10 as well any distortion caused by the lens of image capture device 20 and any sensor non-uniformities. The preferred embodiments, as will be described further herein, compensate for all non-uniformities simultaneously, and therefore it is preferable that background sheet 10 be as uniform as possible.

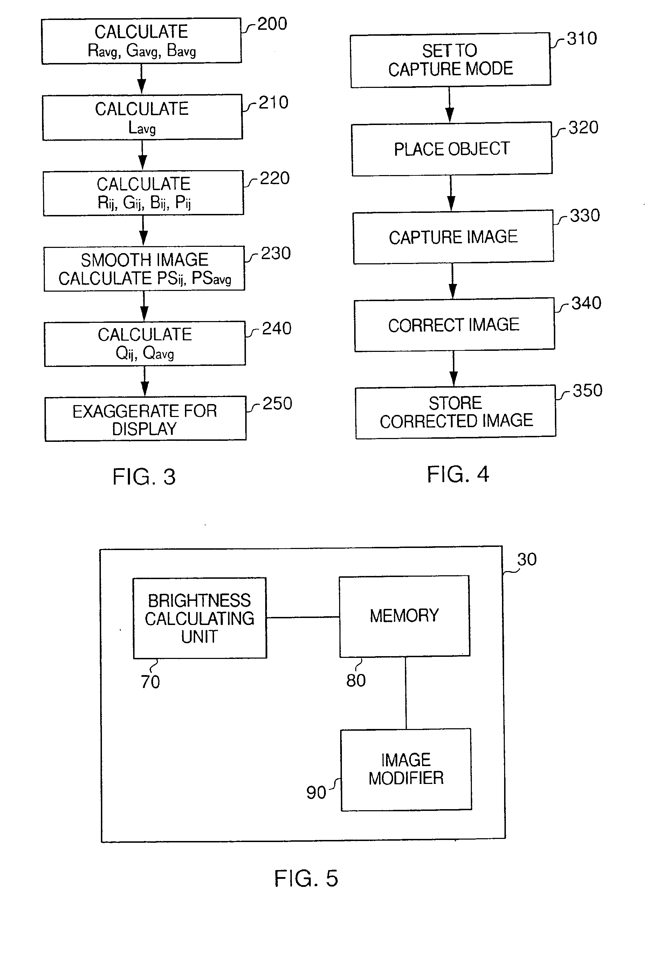

In step 120 the captured reference image is processed as will be described further in relation to Fig. 3, and an initial calibration file is generated comprising the values for $PS_{ij}$ and $PS_{Avg}$ which will be described further below. The processing is intended to exaggerate and display the hot and cold spots in the image so as to enable the user to adjust the lighting to achieve a near flat lighting result. In step 130 the processed image is displayed on monitor 50. In step 140, the user then examines the exaggerated image displayed on monitor 50, and makes a determination as to whether the lighting is moderately flat. In an exemplary embodiment the determination is input by the operation of input device 40. If the user determines that the lighting is moderately flat, in step 160 the initial calibration file created in step 120 is saved as the lighting calibration file, and in step 170 the calibration mode is ended.

If in step 140 the user determines that the lighting is not moderately flat, in step 150 the user adjusts the lighting, and proceeds to capture another calibration image in step 110. Due to the exaggerated image displayed on monitor 50, the experienced user will have a good idea of the adjustment required to illuminant 60 to achieve moderately flat lighting.

The operation of the flow of Fig. 2 preferably arrives at moderately flat lighting, and a saved lighting calibration file. In the event that image capture device 20 is equipped with a live video mode, steps 110 through 130 are run in real time while the user adjusts the lighting in step 150 until the user is satisfied.

Fig. 3 is a high level flow chart of a program run on processor 30 for processing the calibration image. The values of each pixel of the captured calibration image of step 110 are set in an array and represented as $r_{ij}$, $g_{ij}$, $b_{ij}$, with $r_{ij}$, $g_{ij}$ and $b_{ij}$ each representing one channel of the pixel i,j. If the image is from a color filter array, in a preferred embodiment the image is interpolated, preferably by linear, intra-channel interpolation. In step 200 the mean value of each channel over the entire image is calculated, and is represented as $r_{Avg}$, $g_{Avg}$, $b_{Avg}$.

In step 210 the mean of $r_{Avg}$, $g_{Avg}$, $b_{Avg}$ is calculated and set to $I_{Avg}$. $I_{Avg}$ represents the overall average luminance of the image.

In step 220 the values of $R_{ij}$, $G_{ij}$, $B_{ij}$ and $P_{ij}$ are calculated with:

$$R_{ij} = r_{ij}*I_{Avg}/r_{Avg},$$

$$G_{ij} = g_{ij}*I_{Avg}/g_{Avg},$$

$$B_{ij}=b_{ij}*I_{Avg}/b_{Avg} \text{ and}$$

$$P_{ij}= (R_{ij} + G_{ij} + B_{ij})/3.$$

$P_{ij}$ is an approximate measure of light intensity at each pixel under the current lighting conditions.

In step 230 the array of all $P_{ij}$ values is smoothed by performing a spatial convolution of the array $P_{ij}$ with a kernel of size NxN to arrive at an array $PS_{ij}$. In an exemplary embodiment N is on the order of 20, and the kernel is circularly symmetric, uniform or Gaussian. $PS_{Avg}$ is calculated as the mean of $PS_{ij}$ over the array. It is to be noted that $PS_{ij}$ and $PS_{Avg}$ are used as the lighting calibration file, as described above in relation to step 160 of Fig. 2.

In step 240 the values for $Q_{ij}$ are calculated utilizing MaxVal, which is defined as the theoretical maximum value of a pixel, with:

$$Q_{ij} = (116*(PS_{ij}/MaxVal)^{1/3})-116 \qquad \text{if } PS_{ij}/MaxVal > 0.008856$$
$$= 903.3 * PSij/MaxVal \qquad \text{otherwise.}$$

$Q_{ij}$ is an approximate measure of perceived luminance. The mean value of $Q_{ij}$ is calculated and set to $Q_{Avg}$.

In step 250 the values of $Q_{ij}$ are transformed to clearly discernible display values. $\Delta L$ is defined as the maximum tolerable deviation in luminance for flat lighting, and is chosen based on the user's needs. In a preferred embodiment, the hot spots and cold spots are color-coded using the algorithm to be discussed below, however this is not meant to be limiting in any way, and other encoding methods are specifically included without exceeding the scope of the invention. Using the CIE Lab system, we set:

$$L = 75 \text{ which is chosen to achieve a bright display,}$$

$$a = 0 \text{ and}$$

$$b_{ij} = 100*(Q_{ij} - Q_{avg})/\Delta L \text{ with } b_{ij} \text{ being clipped to a maximum value of abs}(b_{ij})\leq$$

$$100.$$

The factor of 100 is utilized in a preferred embodiment to emphasize the differences, and the factor $\Delta L$ is used to scale the result. Each pixel location thus has a color associated with it, whose difference from the average perceived luminance is emphasized by the factor and scaled to a minimum tolerable deviation value. The colors are transformed by color transformations known to those skilled in the art to RGB values for display on monitor 50, thus providing a visual representation of the lighting distribution. These colors are displayed in step 130 of Fig. 2 such that the hot spots, also called bright regions, are colored yellow and the cold spots, also called dark regions, are colored blue. The hotter or the colder, the more saturated the color.

The above computations are meant by way of illustration only, and are not meant to be limiting in any way. The calculations may be substituted for by any set of formulae having the property that the values prior to color encoding are monotonic functions of the light received by the sensor. Similarly, color encoding for visualization is not meant to be limiting in any way, and other visualization methods such as gray luminous intensity or a graphic method such as warping of a regular grid in proportion to the hot and cold spots may be used. For example hot spots in the grid may be convexly distorted and cold spots concavely distorted, or vice versa.

Fig. 4 illustrates a high level flow chart for capturing an image of target two-dimensional object. In step 310 the image capture device 20 and processor 30 are set to capture mode. In step 320 the two-dimensional object to be photographed is placed in the same plane as the background sheet and in step 330 the image is captured by the image capture device 20.

In step 340 the image captured by image capture device 20 is corrected by utilizing the lighting calibration file saved in step 160 of Fig. 2 to modify the vector as follows:

$$(r^*_{ij}, g^*_{ij}, b^*_{ij})= (r_{ij}, g_{ij}, b_{ij})*(PS_{Avg}/PS_{ij}),$$

where $(r^*_{ij}, g^*_{ij}, b^*_{ij})$ represents the new 3 channel data corrected for non-uniform lighting.

In step 350 the corrected image is stored.

Fig. 5 illustrates a high-level block diagram of an exemplary embodiment of processor 30 of Fig. 1, comprising brightness calculating unit 70, memory 80 and an image modifier 90. Brightness calculating unit 70 is connected to memory 80, and image modifier 90 is connected to memory 80. Brightness calculating unit 70 is operable to perform the operation described in relation to Fig. 2 above, and the lighting calibration file is saved in memory 80. Memory 80 may comprise random access memory (RAM), removable or fixed magnetic storage, or any memory device known to those skilled in the art. Image modifier 90 is operable to perform the image correction described in relation to Fig. 4. Memory 80 may be further utilized to store the corrected image as described in relation to Fig. 4. In one embodiment brightness-calculating unit 70 and image modifier 90 are each separate routines operable on a central processing unit (not shown).

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

All publications, patent applications, patents, and other references mentioned herein are incorporated by reference in their entirety. In case of conflict, the patent specification, including definitions, will prevail. In addition, the materials, methods, and examples are illustrative only and not intended to be limiting.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof, which would occur to persons skilled in the art upon reading the foregoing description.

## Claims

**1.** A method of compensating for non-uniform lighting in digital imaging comprising:

capturing a reference image under given lighting conditions;

calculating a measure of the non-uniformity in lighting over said reference image;

saving said measure over said reference image as a lighting calibration file;

capturing an actual image of an object substantially under said given lighting conditions, and

modifying said actual image by reference to said lighting calibration file.

2. The method of claim 1 further comprising displaying a visualization of said reference image.

3. The method of claim 2 wherein said visualization comprises exaggerating respective bright and dark regions within said reference image.

4. The method of claim 3 wherein said exaggerating said bright and dark regions of said reference image comprises normalizing data points with respect to a maximum tolerable deviation in lighting.

5. The method of claim 3 wherein said exaggerating respective bright and dark regions comprises utilizing a function of an approximate measure of perceived luminance.

6. The method of claim 2 wherein said visualization comprises carrying out an encoding utilizing the CIELAB system.

7. The method of any preceding claim wherein said measure of the non-uniformity in lighting over said reference image comprises an approximate measure of light intensity.

8. The method of claim 7 wherein said approximate measure of light intensity comprises an average of red, green and blue pixel brightness levels for respective image pixels.

9. The method of claim 7 wherein said approximate measure of light intensity comprises data smoothed by a spatial convolution with a circularly symmetric, uniform or Gaussian kernel.

10. The method of claim 1 wherein said reference image and said actual image are captured by a digital camera.

11. The method of any preceding claim wherein said reference image and said actual image are captured by a color filter array.

12. An apparatus for digital imaging which compensates for non-uniform lighting, comprising:

an image capture device; and

a processor connected with said image capture device;

said processor comprising:

a) image visualization functionality, associated with said image capture device, for generating a visualization of a reference image; and

b) image processing functionality, associated with said image visualization functionality for:

measuring deviations in lighting levels over said visualization,

using said measured deviations to form a lighting calibration file, and

modifying brightness levels of further images captured by said image capture device, using said lighting calibration file.

13. The apparatus of claim 12 wherein said visualization comprises exaggerating brightness levels in respective bright and dark regions of said reference image.

14. The apparatus of claim 13 wherein said exaggerating comprises normalizing data by a maximum tolerable deviation in lighting.

**15.** The apparatus of claim 13 wherein said exaggerating comprises using a function of an approximate measure of perceived luminance.

**16.** The apparatus of any one of claims 12 to 15, wherein said visualization comprises using an encoding utilizing the CIELAB system.

**17.** The apparatus of any one of claims 12 to 16, wherein said measuring deviations comprises using an approximate measure of light intensity.

**18.** The apparatus of claim 17 wherein said approximate measure of light intensity comprises the average of red, green and blue pixel brightness levels.

**19.** The apparatus of claim 17 wherein said approximate measure of light intensity comprises measuring brightness using data smoothed by a spatial convolution with a circularly symmetric, uniform or Gaussian kernel.

**20.** The apparatus of any one of claims 12 to 19, wherein said image capture device comprises a digital camera.

**21.** The apparatus of any one of claims 12 to 20, wherein said image capture device comprises a digital color array.

**22.** Apparatus for compensating for non-uniform lighting in digital imaging comprising:

an image capture device for capturing a reference image under given lighting conditions;

a brightness calculating unit for calculating measures of non-uniformity in lighting over said reference image;

memory, associated with said brightness calculating unit, for saving said measure over said reference image as a lighting calibration file;

said image capture device further being operable to capture an actual image substantially under said given lighting conditions,

wherein said apparatus comprises an image modifier, associated with said memory, for modifying said actual image by reference to said lighting calibration file.

FIG. 1

FIG. 2

CALCULATE
$R_{avg}$, $G_{avg}$, $B_{avg}$ — 200

CALCULATE
$L_{avg}$ — 210

CALCULATE
$R_{ij}$, $G_{ij}$, $B_{ij}$, $P_{ij}$ — 220

SMOOTH IMAGE
CALCULATE $PS_{ij}$, $PS_{avg}$ — 230

CALCULATE
$Q_{ij}$, $Q_{avg}$ — 240

EXAGGERATE FOR
DISPLAY — 250

FIG. 3

SET TO
CAPTURE MODE — 310

PLACE OBJECT — 320

CAPTURE IMAGE — 330

CORRECT IMAGE — 340

STORE
CORRECTED IMAGE — 350

FIG. 4

— 30

BRIGHTNESS
CALCULATING
UNIT

MEMORY

70

80

IMAGE
MODIFIER

90

FIG. 5